# EUROPÄISCHE PATENTSCHRIFT

(11) **EP 1 574 398 B1**
(45) Veröffentlichungstag und Bekanntmachung des Hinweises auf die Patenterteilung: **07.06.2006**
(21) Anmeldenummer: 04023732.3
(22) Anmeldetag: 05.10.2004
(51) Int. Cl.: B60R 21/01

(54) **Verfahren und Vorrichtung zum Auslösen mindestens einer Insassenschutzeinrichtung in einem Fahrzeug**
Procedure and apparatus for triggering at least one occupant protection device in a vehicle
Procédure et appareil pour déclencher au moins un dispositif de protection de passager dans un véhicule

(30) Priorität: 23.12.2003 DE 10360823
(43) Veröffentlichungstag der Anmeldung: 14.09.2005
(73) Patentinhaber: Conti Temic microelectronic GmbH, 90411 Nürnberg (DE)
(72) Erfinder: Bärenweiler, Josef, 90513 Zirndorf (DE); Christl, Helmut, 85092 Kösching (DE); Fendt, Günter, 86529 Schrobenhausen (DE); Vogl, Armin, 86573 Obergrusbach (DE); Steurer, Helmut, 85302 Junkenhofen (DE)

(56) Entgegenhaltungen:
- EP-A- 0 684 162
- DE-A1- 4 300 678
- DE-A1- 10 117 220

## Beschreibung

Die Erfindung betrifft ein Verfahren zum Auslösen mindestens einer Insassenschutzeinrichtung in einem Fahrzeug gemäß dem Oberbegriff von Anspruch 1 und eine entsprechende Vorrichtung gemäß Anspruch 12.

Insassenschutzeinrichtungen wie beispielsweise ein Airbag oder ein Überrollbügel gewährleisten in Kombination mit Rückhaltesystemen einen hohen Schutzstandard für die Insassen eines Fahrzeugs im Kollisionsfall. Ein etwaiges Auslösen einer Insassenschutzeinrichtung erfolgt üblicherweise in Abhängigkeit von sicherheitsrelevanten Parametern wie beispielsweise von beschleunigungsabhängigen Werten oder der Unfallsituation.

Diese Parameter werden einer mit der Insassenschutzvorrichtung gekoppelten Steuereinheit als Eingangssignale zugeführt, mit Auslöseschwellwerten verglichen und nachfolgend unter zu Hilfenahme einer Auslöseentscheidungsmatrix in ein Ausgangssignal zum Auslösen der Insassenschutzeinrichtung gewandelt. Aus dem Stand der Technik ist eine Vielzahl von Lösungen zur Verbesserung des Auslöseverhaltens von Insassenschutzeinrichtungen bekannt, bei denen weitere sicherheitsrelevante Informationen wie beispielsweise die Fahrzeuggeschwindigkeit vor oder während der Kollision der Steuereinheit zur Generierung eines Ausgangssignals zugeführt werden.

Die DE 101 17 220 A1 offenbart ein Verfahren zum Auslösen eines Insassenschutzsystems, bei dem ein von Sensoren ausgehendes Freigabesignal für die Auslösung des Insassenschutzsystems generiert und mit einem als Auslösekriterium benutzten Schwellwert verglichen wird. Der Schwellwert wird fortlaufend und in Abhängigkeit von der gemessenen Fahrzeuggeschwindigkeit oder anderen gemessenen Sensorsignalen verändert bzw. angepasst. Er wird bei steigender Geschwindigkeit des Fahrzeugs erhöht und bei fallender Geschwindigkeit oder beim Einsetzen eines Antiblockiersystems vermindert. Nachteilig ist jedoch, dass die Änderung des Schwellwerts nur linear zur Änderung der Fahrzeuggeschwindigkeit oder der gemessenen Sensorsignale erfolgt, obwohl sich die Unfallwahrscheinlichkeit statistisch nicht ausschließlich linear zu einer steigenden Fahrzeuggeschwindigkeit verhält.

Neben den vorgenannten Parametern können zusätzlich auch die Zustandsinformationen von Fahrzeugtürkontakten einer Steuereinheit für eine Insassenschutzeinrichtung des Fahrzeugs zugeführt werden, um ein entsprechendes Ausgangssignal zum Auslösen von beispielsweise einem Airbag zu generieren. In der DE 43 00 678 A1 wird dazu vorgeschlagen, dass ein Stromkreis der Insassenschutzeinrichtung durch einen Türkontakt unterbrochen wird. Insbesondere wird bei einer geöffneten Fahrzeugtür der einen Beschleunigungssensor umfassende Aktivierungsstromkreis der Insassenschutzeinrichtung unterbrochen. Dem Türkontakt sind ferner Mittel wie beispielsweise ein Relais zur verzögerten Aufhebung der Unterbrechung des Stromkreises nach dem Schließen der Türe zugeordnet. Durch diese Erfindung soll ein Auslösen des Airbags bei nicht kollisionsbedingten Beschleunigungen des Fahrzeugs bzw. bei nicht kollisionsbedingten Beschleunigungs- oder Störsignaturen, wie sie beispielsweise bei einem starken Zuschlagen einer Fahrzeugtür auftreten können, verhindert werden. Ein Nachteil besteht jedoch darin, dass Insassen im Kollisionsfall bei nicht ordnungsgemäß verschlossenen Fahrzeugtüren durch die Unterbrechung des Aktivierungsschaltkreises nicht ausreichend geschützt sind, da der Airbag nicht zünden kann.

Aufgabe der Erfindung ist es daher, ein Verfahren und eine Vorrichtung zum Auslösen mindestens einer Insassenschutzeinrichtung in einem Fahrzeug vorzuschlagen, die einerseits das Auslösen bei einer nicht kollisionsbedingten Beschleunigung des Fahrzeugs oder einer Krafteinwirkung auf das Fahrzeug zuverlässig verhindern und andererseits auch im Kollisionsfall eine zuverlässige Auslösung der mindestens einen Insassenschutzvorrichtung sicherstellen.

Diese Aufgabe wird durch ein Verfahren zum Auslösen mindestens einer Insassenschutzeinrichtung in einem Fahrzeug mit den Merkmalen von Anspruch 1 und durch eine entsprechende Vorrichtung mit den Merkmalen von Anspruch 12 gelöst. Weitergehende Ausgestaltungen der Erfindung ergeben sich aus den abhängigen Ansprüchen.

Der Erfindung liegt der Gedanke zugrunde, eine Auslöseschwelle für eine Insassenschutzeinrichtung insbesondere bei einer geöffneten Tür eines Fahrzeugs anzuheben, um robuster gegenüber Fehlauslösungen zu sein. Dieser Gedanke basiert darauf, dass im Bereich der Türen eines Fahrzeugs angeordnete Insassenschutzsysteme wie beispielsweise Seiten-Airbags aufgrund der geringen "Knautschzonen" sehr viel empfindlicher auf Beschleunigungen und Stösse reagieren und daher Störsignaturen aufgrund nicht kollisionsbedingter Beschleunigungen und/oder Krafteinwirkungen schnell zu einem unerwünschten Auslösen der Insassenschutzsysteme führen können. Ein wesentlicher Gedanke der Erfindung besteht nun darin, eine türkontaktabhängige Steuerung von auslöserelevanten Schwellen eines Algorithmus zü implementieren, der für das Aktivieren einer Insassenschutzeinrichtung vorgesehen ist, die abhängig von Eingangssignalen einer Steuereinheit aktiviert wird, die mit den Schwellen verglichen werden. Dadurch soll verhindert werden, dass im Fehlerfall eines Türkontaktes oder bei einer nicht vollständig geschlossenen Tür die Insassenschutzeinrichtung deaktiviert ist und Insassen eines Kraftfahrzeugs ungeschützt sind. Weiterhin gewährleistet die Erfindung, dass die Insassenschutzeinrichtung unerwünschterweise aktiviert wird, beispielsweise bei einem heftigen Zuschlagen von Fahrzeugtüren oder bei einem Anstoßen einer Fahrzeugtür beim Öffnen.

Die Erfindung betrifft nun ein Verfahren zum Auslösen mindestens einer Insassenschutzeinrichtung in einem Fahrzeug unter Verwendung einer Steuereinheit und mindestens eines mit dieser Steuereinheit elektrisch gekoppelten Sensors zum Erfassen einer Beschleunigung des Fahrzeugs und/oder Krafteinwirkung auf das Fahrzeug. Die Steuereinheit vergleicht ein Signal des Sensors mit einem Auslöseschwellwert für die mindestens eine Insasasenschutzeinrichtung und erzeugt davon abhängig mindestens ein Auslösesignal zum Auslösen der mindestens einen Insassenschutzeinrichtung. Es wird ferner mindestens eine Zustandsinformation mindestens eines Fahrzeugtürkontakts erfasst. Die mindestens eine Zustandsinformation des mindestens einen Fahrzeugtürkontakts wird nun zur Adaption des Auslöseschwellwerts verwendet. Dieses Verfahren besitzt den Vorteil, dass in Abhängigkeit der ermittelten Zustandsinformationen des mindestens einen Türkontakts und etwaiger Adaption, insbesondere Verschiebung des Auslöseschwellwerts eine nicht kollisionsbedingte Beschleunigung des Fahrzeugs oder nicht kollisionsbedingte Krafteinwirkung auf das Fahrzeug zuverlässig detektiert werden kann und somit ein ungewolltes Auslösen der mindestens einen Insassenschutzeinrichtung verhindert werden kann.

Als mindestens eine Zustandsinformation des mindestens einen Fahrzeugtürkontakts können neben den Zuständen "Fahrzeugtür offen" und "Fahrzeugtür geschlossen" auch Zwischenzustände detektiert werden. Beispielsweise kann ein Zwischenzustand dann vorliegen, wenn die Fahrzeugtür im Türschloss zwar verankert, aber nicht vollständig arretiert ist.

Dadurch, dass zumindest bei einer geöffneten Fahrzeugtür die Auslösung einer Insassenschutzeinrichtung nicht deaktiviert, sondern der Auslöseschwellwert festgelegt wird, sind Fahrzeuginsassen auch bei einem verkehrsbedingten Halten des Fahrzeugs auf Grund eines Staus oder bei zähflüssigem Stadtverkehr bzw. im Bereich einer Kreuzung im Falle eines Auffahrunfalls oder seitlichen Aufprallunfalls durch die Insassenschutzeinrichtung geschützt. Bei einer offenen oder nicht vollständig geschlossenen Fahrzeugtür erfolgt die Adaption des Auslöseschwellwerts in Richtung eines unempfindlicheren bzw. höheren Wertes.

In einer weiteren bevorzugten Ausgestaltung der Erfindung kann zusätzlich zu den Zustandsinformationen der Türkontakte die Fahrzeuggeschwindigkeit als Eingangsgröße zur Adaption der Auslöseschwelle herangezogen werden. Insbesondere kann der Auslöseschwellwert damit über- oder unterkompensiert werden.

Die Adaption des Auslöseschwellwerts umfasst bei einem stehenden Fahrzeug das Verschieben des Auslöseschwellwerts in Richtung eines höheren Wertes. Bei einem fahrenden Fahrzeug kann die Adaption hingegen zusätzlich die Änderung des Auslöseschwellwerts in Abhängigkeit der Fahrzeuggeschwindigkeit umfassen.

Indem zusätzlich Geschwindigkeitsinformationen zu den Informationen über die Fahrzeugtürkontakte, dem Fahrzeugtyp, das Fahrzeugalter oder den Zustand der Bremsanlage in die Entscheidungsmatrix zur Auslösung einer Insassenschutzeinrichtung einfließen, wird der Schutz für die Insassen des Fahrzeugs auch bei einem fahrenden Fahrzeug verbessert.

Bei der Kompensation des Auslöseschwellwerts kann es sich um einen linearen, nichtlinearen oder stufenförmigen Zusammenhang abhängig von der Fahrzeuggeschwindigkeit handeln. Bei steigender Fahrzeuggeschwindigkeit kann sich der Auslöseschwellwert gemäß einem frei wählbaren oder sich selbsttätig einstellbaren Kompensationsgrad verringern. Beispielsweise kann der Auslöseschwellwert in Richtung eines Basisschwellwertes ausgehend von einem hohen bzw. unempfindlichen Wert verschoben werden. Der Grundgedanke dieser Maßnahme besteht darin, dass es bei einem schnell fahrenden Fahrzeug eher unwahrscheinlich ist, dass eine Fahrzeugtür geöffnet wird/ist/bleibt.

Unter Kompensationsgrad wird die Änderung des Auslöseschwellwerts respektive der Gradient in Abhängigkeit von der Fahrzeuggeschwindigkeit verstanden.

Die Adaption des Auslöseschwellwerts erfolgt vorzugsweise in einem Geschwindigkeitskompensationsbereich, der von einem unteren und einem oberen Geschwindigkeitskompensationspunkt begrenzt ist.

Es hat sich als besonders vorteilhaft herausgestellt, wenn der untere Geschwindigkeitskompensationspunkt bei oder nahe bei 0 km/h Fahrzeuggeschwindigkeit und der obere Geschwindigkeitskompensationspunkt bei bzw. nahe bei einer innerortszulässigen Geschwindigkeitsmarke oder bei bzw. nahe einer ausserortszulässigen Geschwindigkeitsmarke platziert ist. Grundsätzlich sind der untere und/oder der obere Geschwindigkeitskompensationspunkt beliebig einstellbar, sodass der Geschwindigkeitskompensationsbereich in seiner Größe und.Lage variabel ausgebildet sein kann.

Vorzugsweise kompensiert die Fahrzeuggeschwindigkeit die Adaption des Auslöseschwellwerts auf einen höheren bzw. unempfindlicheren Wert zumindest teilweise, insbesondere indem der Auslöseschwellwert mit steigender Geschwindigkeit auf einen niedrigeren bzw. empfindlicheren Wert abgesenkt wird.

Eine Adaption durch die Fahrzeuggeschwindigkeit kann auch nur dann aktiviert werden, wenn der Auslöseschwellwert derart adaptiert wurde, dass er bei offener Fahrzeugtüre einen höheren bzw. unempfindlicheren Wert aufweist.

Die Erfindung betrifft ferner eine Vorrichtung zum Auslösen mindestens einer Insassenschutzeinrichtung in einem Fahrzeug mit einer Steuereinheit, die zum Ausführen eines Verfahrens gemäss der Erfindung ausgebildet ist.

Vorzugsweise weist die Vorrichtung einen Mikroprozessor und einen Speicher auf, in dem ein Programm abgelegt ist, das ein Verfahren nach der Erfindung implementiert.

Die als Beschleunigungs- und/oder Drucksensoren ausgebildeten Sensoren sind vorzugsweise im Bereich der Türkontakte bzw. des Türschlosses angeordnet und mittels einer fahrzeuginternen Verbindung, wie beispielsweise eines CAN-Busses an die Steuereinheit kommunikationsmäßig angeschlossen.

Die Sensoren können an jeder einzelnen Fahrzeugtür oder aber auch nur an der Fahrer- und Beifahrertür (bei einem viertürigen Fahrzeug) vorgesehen sein. Da jeder Sensor ein von den anderen Sensoren unabhängiges Signal bzw. unabhängige Information an die Steuereinheit liefert, kann die Adaption des Auslöseschwellwerts auch derart erfolgen, dass die einzelnen Signale in der Steuereinheit zur Bildung des Ausgangssignals zum Auslösen der Insassenschutzeinrichtung unterschiedlich gewertet werden. Dies erweist sich insbesondere dann als vorteilhaft, wenn beispielsweise die Fahrertür nicht vollständig geschlossen und der Beifahrersitz unbesetzt ist und ein Auslösen des Beifahrerairbags im Falle eines Unfalls vermieden werden soll. Damit kann erreicht werden, dass eine oder mehrere Insassenschutzeinrichtungen ausschließlich für den Fahrer aktiviert werden.

Wesentliche Merkmale und Vorteile der Erfindung sind im Folgenden nochmals kurz zusammengefasst:
1. Adaption des Auslöseschwellwertes im Steuergerät für mindestens eine Insassenschutzeinrichtung erfolgt abhängig von Zustandsinformationen von Fahrzeugtürkontakten und gegebenenfalls der Fahrzeuggeschwindigkeit;
2. Adaption des Auslöseschwellwerts ist in einem frei definierbaren Geschwindigkeitskompensationsbereich möglich;
3. Änderung des Auslöseschwellwerts abhängig von der Fahrzeuggeschwindigkeit kann linear, nichtlinear oder stufenförmig erfolgen.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

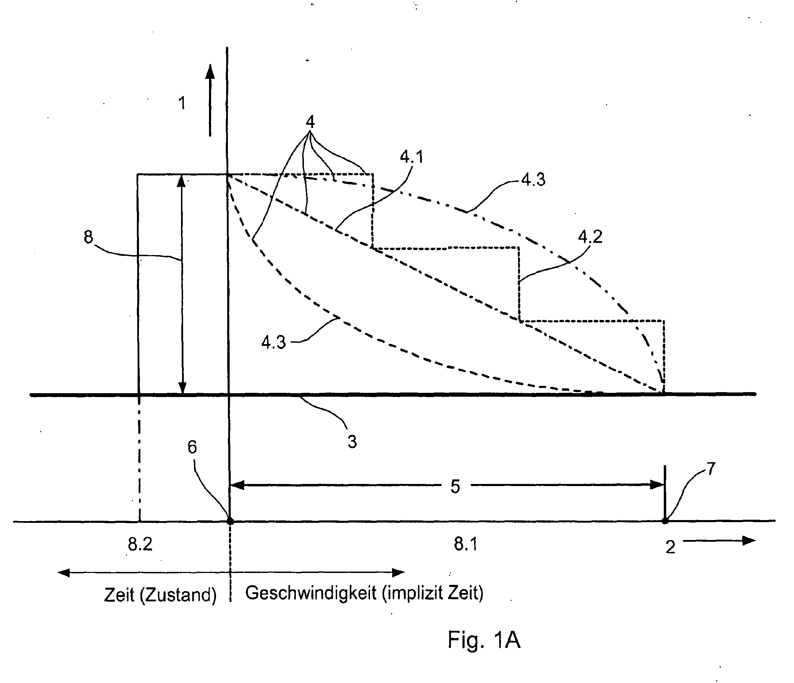

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet. Die Zeichnungen zeigen in
- Fig. 1A: ein Diagramm mit einem Verlauf einer Auslöseschwelle einer Insassenschutzeinrichtung bei einer geschlossenen Fahrzeugtür und

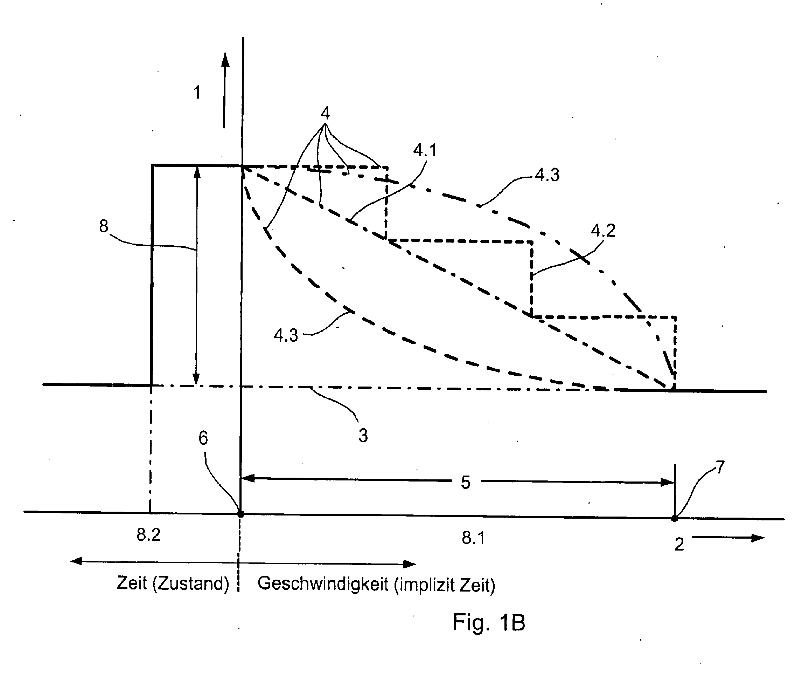

- Fig. 1B: das in Fig. 1A dargestellte Diagramm mit dem Verlauf der Auslöseschwelle bei einer offenen Fahrzeugtür angepasst gemäss der Erfindung.

Das in Fig. 1A illustrierte Diagramm zeigt den ersten und vierten Quadranten eines Koordinatensystems, bei dem die Ordinatenachse einer Auslöseschwelle 1 und die Abszissenachse rechts von der Ordinantenachse einer Fahrzeuggeschwindigkeit 2 und links von der Ordinatenachse einer Zeit bzw. einer Zustandsinforamtion von Fahrzeugstüren entspricht. Ein Basisauslöseschwellwert ist für eine nicht dargestellte Airbag-Insassenschutzeinrichtung mit dem Bezugszeichen 3 versehen (dicke Linie). Dem Basisauslöseschwellwert 3 ist ein vergleichsweise geringer bzw. empfindlicher Wert zugewiesen. Der Basisauslöseschwellwert 3 wird immer dann als aktueller Auslöseschwellwert 1 verwendet, wenn alle Fahrzeugtüren vollständig verschlossen sind und diese Zustandsinformationen 8.2 über Fahrzeugtürkontakte einer nicht dargestellten Steuereinheit des Fahrzeugs mit der Airbag-Insassenschutzeinrichtung zugeführt werden.

Bei einer offenen bzw. nicht vollständig verschlossenen Fahrzeugtür wird der Auslöseschwellwert 1 in Richtung eines höheren bzw. unempfindlicheren Wertes verschoben. In dem in der Fig. 1B dargestellten Ausführungsbeispiel ist die zu der Zustandsinformation "Fahrzeugtür offen" 8.1 zugehörige Auslöseschwelle 1um die Adaptionsgrösse 8 nach oben verschoben (dicke Linien). Durch die Verschiebung des Auslöseschwellwerts 1 wird erreicht, dass die Airbag-Insassenschutzeinrichtung bei einer nicht kollisionsbedingten Beschleunigung eines stehenden Fahrzeugs, beispielsweise bedingt durch das Anschlagen der Fahrzeugtüre an ein benachbart parkendes Fahrzeug, nicht auslöst. Der Betrag der Verschiebung des Auslöseschwellwerts ist dabei variabel einstellbar.

Der Auslöseschwellwert 1 kann zusätzlich in Abhängigkeit der Fahrzeuggeschwindigkeit 2 adaptiert werden. Die mit dem Bezugszeichen 4.1 bis 4.3 bezeichneten Graphen stellen verschiedene Kompensationsgrade 4 des Auslöseschwellwerts dar. Bei der Kompensation kann es sich dabei um einen linearen Zusammenhang 4.1, einen nichtlinearen Zusammenhang 4.3 oder einen stufenförmigen Zusammenhang 4.2 handeln. Alle dargestellten Kompensationsgrade haben gemeinsam, dass sie sich von einem unteren Geschwindigkeitspunkt 6 bis zu einem oberen Geschwindigkeitspunkt 7 innerhalb eines Geschwindigkeitskompensationsbereichs 5 erstrecken. Im Bereich des oberen Geschwindigkeitspunktes 7 entspricht der adaptierbare Auslöseschwellwert 1 im Wesentlichen dem Basisauslöseschwellwert 3. Der untere Geschwindigkeitspunkt 6 liegt bei einer Fahrzeuggeschwindigkeit von etwa 0 km/h, kann jedoch auch abweichend davon bis zu einem maximalen Schritttempo von ungefähr 7 km/h verschoben werden.

Der obere Geschwindigkeitspunkt 7 ist hingegen bei oder nahe bei einer innerortszulässigen Geschwindigkeitsmarke von 50 km/h oder einer ausserortszulässigen Geschwindigkeitsmarke von 100 km/h Fahrzeuggeschwindigkeit 2 platziert.

Der Unterschied zwischen den dargestellten Kompensationsgraden 4 besteht darin, dass die einzelnen Gradienten der entsprechenden Auslöseschwellwerte 1 unterschiedlich ausgebildet sind. Vor allem durch den stufenförmigen Kompensationsgrad 4.2 kann die Adaption des Auslöseschwellwerts bzw. der Auslöseschwelle in besonders geeigneter Weisen an verschiedene zulässige Bereiche angepasst werden.

### Bezugszeichen

- 1: Auslöseschwelle bzw. Auslöseschwellwert
- 2: Fahrzeuggeschwindigkeit
- 3: Basisauslöseschwellwert
- 4: Kompensationsgrade
- 4.1: lineare Kompensation
- 4.2: stufenförmige Kompensation
- 4.3: nicht lineare Kompensation
- 5: Geschwindigkeitskompensationsbereich
- 6: unterer Geschwindigkeitskompensationspunkt
- 7: oberer Geschwindigkeitskompensationspunkt
- 8: Adaptionsgrösse
- 8.1: Fahrzeugtür offen
- 8.2: Fahrzeugtür geschlossen

## Patentansprüche

1. Verfahren zum Auslösen mindestens einer Insassenschutzeinrichtung in einem Fahrzeug unter Verwendung mindestens einer Steuereinheit und mindestens eines mit dieser Steuereinheit elektrisch gekoppelten Sensors zum Erfassen einer Beschleunigung des Fahrzeugs und/oder einer Krafteinwirkung auf das Fahrzeug, wobei die Steuereinheit ein Signal des Sensors mit einem Auslöseschwellwert (1) für die mindestens eine Insassenschutzeinrichtung vergleicht und davon abhängig mindestens ein Ausgangssignal zum Auslösen der mindestens einen Insassenschutzeinrichtung erzeugt und mindestens eine Zustandsinformation (8.1, 8.2) mindestens eines Fahrzeugtürkontakts erfasst,
**dadurch gekennzeichnet, dass**
die mindestens eine Zustandsinformation (8.1, 8.2) des mindestens einen Fahrzeugtürkontakts von der Steuereinheit zur Adaption des Auslöseschwellwerts (1) verwendet wird.

2. Verfahren nach Anspruch 1,
**dadurch gekennzeichnet dass**,
der Auslöseschwellwert (1) derart adaptiert wird, dass er bei offener Fahrzeugtüre (8.1) einen höheren bzw. unempfindlicheren Wert aufweist.

3. Verfahren nach Anspruch 1 oder 2,
**dadurch gekennzeichnet, dass**
außerdem die Fahrzeuggeschwindigkeit (2) zur Adaption des Auslöseschwellwerts (1) verwendet wird.

4. Verfahren nach Anspruch 3,
**dadurch gekennzeichnet, dass**
der Auslöseschwellwert (1) gemäß einem linearen Zusammenhang (4.1) abhängig von der Fahrzeuggeschwindigkeit (2) adaptiert wird.

5. Verfahren nach Anspruch 3,
**dadurch gekennzeichnet, dass**
der Auslöseschwellwert (1) gemäß einem nichtlinearen Zusammenhang (4.3) abhängig von der Fahrzeuggeschwindigkeit (2) adaptiert wird.

6. Verfahren nach Anspruch 3,
**dadurch gekennzeichnet, dass**
der Auslöseschwellwert (1) gemäß einem stufenförmigen Zusammenhang (4.2) abhängig von der Fahrzeuggeschwindigkeit (2) adaptiert wird.

7. Verfahren nach einem der Ansprüche 3 bis 6,
**dadurch gekennzeichnet, dass**
zur Adaption des Auslöseschwellwertes (1) ein Geschwindigkeitskompensationsbereich (5) vorgesehen ist, der von einem unteren Geschwindigkeitskompensationspunkt (6) und von einem oberen Geschwindigkeitskompensationspunkt (7) begrenzt ist.

8. Verfahren nach Anspruch 7,
**dadurch gekennzeichnet, dass**
der untere Geschwindigkeitskompensationspunkt (6) bei oder nahe bei 0 km/h Fahrzeuggeschwindigkeit liegt.

9. Verfahren nach Anspruch 7 oder 8,
**dadurch gekennzeichnet, dass**
der obere Geschwindigkeitskompensationspunkt (7) bei oder nahe bei einer innerortszulässigen Geschwindigkeit oder bei oder nahe bei einer ausserortszulässigen Geschwindigkeit liegt.

10. Verfahren nach einem der Ansprüche 3 bis 9,
**dadurch gekennzeichnet, dass**
die Fahrzeuggeschwindigkeit (2) die Adaption (8) des Auslöseschwellwerts (1) auf einen höheren bzw. unempfindlicheren Wert zumindest teilweise kompensiert.

11. Verfahren nach einem der Ansprüche 3 bis 10,
**dadurch gekennzeichnet, dass**
eine Adaption durch die Fahrzeuggeschwindigkeit nur dann aktiviert wird, wenn der Auslöseschwellwert (1) derart adaptiert wurde, dass er bei offener Fahrzeugtüre (8.1) einen höheren bzw. unempfindlicheren Wert aufweist.

12. Vorrichtung zum Auslösen mindestens einer Insassenschutzeinrichtung in einem Fahrzeug mit einer Steuereinheit, die zum Ausführen eines Verfahrens nach einem der vorhergehenden Ansprüche ausgebildet ist.

13. Vorrichtung nach Anspruch 12,
**dadurch gekennzeichnet, dass**
sie einen Mikroprozessor und einen Speicher aufweist, in dem ein Programm abgelegt ist, das ein Verfahren nach einem der Ansprüche 1-9 implementiert.

## Claims

1. Method for tripping at least one passenger safeguard in a vehicle using at least one control unit and at least one sensor for detecting an acceleration of the vehicle and/or an action of a force upon the vehicle, said sensor being electrically coupled to this control unit, wherein the control unit compares a signal of the sensor with a tripping limit (1) for the at least one passenger safeguard and, depending thereon, generates at least one output signal for tripping the at least one passenger safeguard and detects at least one piece of state information (8.1, 8.2) of at least one vehicle door contact,
**characterized in**
**that** the at least one piece of state information (8.1, 8.2) of the at least one vehicle door contact is used by the control unit for adapting the tripping limit (1).

2. Method according to claim 1,
**characterized in**
**that** the tripping limit (1) is adapted in such a manner that it comprises a higher or less sensitive value when the vehicle door is open (8.1).

3. Method according to claim 1 or 2,
**characterized in**
**that**, in addition, the vehicle speed (2) is used for adapting the tripping limit (1).

4. Method according to claim 3,
**characterized in**
**that** the tripping limit (1) is adapted according to a linear interrelationship (4.1) depending on the vehicle speed (2).

5. Method according to claim 3,
**characterized in**
**that** the tripping limit (1) is adapted according to a non-linear interrelationship (4.3) depending on the vehicle speed (2).

6. Method according to claim 3,
**characterized in**
**that** the tripping limit (1) is adapted according to a step-by-step interrelationship (4.2) depending on the vehicle speed (2).

7. Method according to any one of claims 3 to 6,
**characterized in**
**that** a speed compensation range (5) is provided for adapting the tripping limit (1), said speed compensation range (5) being limited by a lower speed compensation point (6) and by an upper speed compensation point (7).

8. Method according to claim 7,
**characterized in**
**that** the lower speed compensation point (6) corresponds to a vehicle speed of or of nearly 0 km/h.

9. Method according to claim 7 or 8,
**characterized in**
**that** the upper speed compensation point (7) corresponds to a speed limit that is permissible in built-up areas or to a speed near this speed limit or to a speed limit that is permissible outside built-up areas or to a speed near that speed limit.

10. Method according to any one of claims 3 to 9,
**characterized in**
**that** the vehicle speed (2) at least partially compensates the adaptation (8) of the tripping limit (1) to a higher or less sensitive value.

11. Method according to any one of claims 3 to 10,
**characterized in**
**that** an adaptation by the vehicle speed is only activated if the tripping limit (1) has been adapted in such a manner that it comprises a higher or less sensitive value when the vehicle door is open (8.1).

12. Device for tripping at least one passenger safeguard in a vehicle with a control unit configured for carrying out a method according to any one of the preceding claims.

13. Device according to claim 12,
**characterized in**
**that** it comprises a microprocessor and a memory, in which memory there is deposited a programme that implements a method according to any one of claims 1 to 9.

## Revendications

1. Procédé de déclenchement d'au moins un équipement de protection d'occupants dans un véhicule avec utilisation d'au moins une unité de commande et d'au moins un capteur, couplé électriquement à cette unité de commande, pour la détection d'une accélération du véhicule et/ou d'une action de force sur le véhicule, l'unité de commande comparant un signal du capteur à une valeur de seuil de déclenchement (1) pour l'équipement de protection d'occupants au moins au nombre de un et produisant, en fonction de cela, au moins un signal de sortie pour le déclenchement de l'équipement de protection d'occupants au moins au nombre de un, et détectant au moins une information d'état (8.1, 8.2) d'au moins un contact de porte de véhicule,
**caractérisé en ce que**
l'information d'état (8.1, 8.2) au moins au nombre de un du contact de porte de véhicule au moins au nombre de un est utilisée par l'unité de commande pour l'adaptation de la valeur de seuil de déclenchement (1).

2. Procédé selon la revendication 1,
**caractérisé en ce que**
la valeur de seuil de déclenchement (1) est adaptée de sorte que, dans le cas d'une porte de véhicule ouverte (8.1), elle présente une valeur plus élevée ou moins sensible.

3. Procédé selon la revendication 1 ou 2,
**caractérisé en ce que**
en outre la vitesse du véhicule (2) est utilisée pour l'adaptation de la valeur de seuil de déclenchement (1).

4. Procédé selon la revendication 3,
**caractérisé en ce que**
la valeur de seuil de déclenchement (1) est adaptée selon une relation linéaire (4.1) en fonction de la vitesse du véhicule (2).

5. Procédé selon la revendication 3,
**caractérisé en ce que**
la valeur de seuil de déclenchement (1) est adaptée selon une relation non linéaire (4.3) en fonction de la vitesse du véhicule (2).

6. Procédé selon la revendication 3,
**caractérisé en ce que**
la valeur de seuil de déclenchement (1) est adaptée selon une relation étagée (4.2) en fonction de la vitesse du véhicule (2).

7. Procédé selon une des revendications 3 à 6,
**caractérisé en ce que**,
pour l'adaptation de la valeur de seuil de déclenchement (1), il est prévu une plage de compensation de vitesse (5) qui est limitée par un point de compensation de vitesse inférieur (6) et par un point de compensation de vitesse supérieur (7).

8. Procédé selon la revendication 7,
**caractérisé en ce que** le point de compensation de vitesse inférieur (6) est égal ou proche de la vitesse du véhicule de 0 km/h.

9. Procédé selon la revendication 7 ou 8,
**caractérisé en ce que** le point de compensation de vitesse supérieur (7) est égal à, ou proche d'une vitesse autorisée en agglomération ou égal à, ou proche d'une vitesse autorisée hors agglomération.

10. Procédé selon une des revendications 3 à 9,
**caractérisé en ce que**
la vitesse du véhicule (2) compense au moins partiellement à une valeur plus élevée ou moins sensible l'adaptation (8) de la valeur de seuil de déclenchement (1).

11. Procédé selon une des revendications 3 à 10,
**caractérisé en ce**
**qu'**une adaptation n'est activée par la vitesse du véhicule que lorsque la valeur de seuil de déclenchement (1) a été adaptée de sorte que, dans le cas d'une porte de véhicule ouverte (8.1), elle présente une valeur plus élevée ou moins sensible.

12. Dispositif pour le déclenchement d'au moins un équipement de protection d'occupants dans un véhicule avec une unité de commande qui est constituée pour la réalisation d'un procédé selon une des revendications précédentes.

13. Dispositif selon la revendication 12,
**caractérisé en ce**
**qu'**il présente un microprocesseur et une mémoire dans laquelle est stocké un programme qui met en oeuvre un procédé selon une des revendications 1-9.
